# EUROPEAN PATENT SPECIFICATION

(11) **EP 3 180 237 B1**
(45) Date of publication and mention of the grant of the patent: **26.09.2018**
(21) Application number: 15763089.8
(22) Date of filing: 24.06.2015
(51) Int. Cl.: B62M 9/14, B62M 9/04, B62M 11/04, B62M 1/36, B62M 9/12, B62M 9/16

(54) **BICYCLE EQUIPPED WITH SYSTEM FOR LATERALLY SLIDING THE CHAIN**
FAHRRAD MIT EINEM SYSTEM FÜR SEITLICH GLEITENDE KETTE
BICYCLETTE ÉQUIPÉE D'UN SYSTÈME DE COULISSEMENT LATÉRAL DE LA CHAÎNE

(30) Priority: 15.07.2014 IT IM20140006; 15.07.2014 IT IM20140007
(43) Date of publication of application: 21.06.2017
(73) Proprietor: Giusto, Mario, 18010 Cervo (IM) (IT)
(72) Inventor: Giusto, Mario, 18010 Cervo (IM) (IT)
(74) Representative: Garavelli, Paolo
(86) International application number: PCT/IT2015/000166
(87) International publication number: WO 2016/009456

(56) References cited:
- EP-A2- 1 580 114
- EP-B1- 1 580 114
- WO-A1-02/08050

## Description

The present invention falls within the field of mechanics applied to race bicycles or mountain bikes, and is related in particular to a bicycle equipped with a system for laterally sliding the chain.

Examples to these laterally sliding chain systems might be found in documents EP 1 580 114 B1 and WO 02/08050 A1 which are considered to be the most relevant Prior Art.

The invention radically modifies the existing prior art in the manual mechanical system for the speed gear ratio of race bicycles or mountain bikes, which is based on one or more front crowns placed axial with the central movement and a pinion pack placed axial with the rear wheel, with chain-type traction which operates by moving obliquely to the bicycle axis.

In the prior art, there are no solutions similar to that of the present invention.

Object of the present invention is removing the following prior art limitations:
- traction chain obliqueness
- need of a minimum number of two front crowns with derailing device and related speed gear;
- maximum number of 11 ratios on rear pinion;
- impossibility of regularly using all ratios being present;
- speed gear of the long rod type, necessary for reaching minimum ratios lower than 0.70.

The above and other objects and advantages of the invention, as will result from the following description, are obtained with a bicycle equipped with a system for laterally sliding the chain as claimed in claims 1 and 4. Preferred embodiment and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention, as will appear from the enclosed claims.

The present invention will be better described by some preferred embodiments thereof, provided as a non-limiting example, with reference to the enclosed drawings, in which:
- Figure 1 shows a plan view of a first preferred embodiment of the system according to the present invention;
- Figure 2 shows a longitudinally sectioned view of the system of Figure 1;
- Figure 3 shows two sectional views, where the dashed parts show the displacement of the mobile crown with respect to the tracks, provided to enable the lateral sliding movement and the withdrawal of the system;
- Figure 4 shows an exploded view of the system of Figure 1;
- Figure 5 shows a plan view of the system of Figure 1 applied to a bicycle;
- Figure 6 shows a side view of the system of Figure 1 applied to a bicycle;
- Figure 7 shows a perspective view of the system of Figure 6;
- Figure 8 shows a plan view of a second preferred embodiment of the system according to the present invention;
- Figure 9 shows a longitudinally sectioned view of the system of Figure 8;
- Figure 10 shows an exploded view of the system of Figure 8;
- Figure 11 shows a plan view of the system of Figure 8 applied to a bicycle;
- Figure 12 shows a side view of the system of Figure 8 applied to a bicycle; and
- Figure 13 shows a perspective view of the system of Figure 12.

The above listed limitations are removed by a system of the lateral sliding type, which provides for the insertion of a suitable mechanism which generates the automatic lateral displacement of the transmission chain, coupled with the displacement of the chain on the rear pinion ratios. The mechanism of the present Application is inserted between the pedal area and the pinion pack. All standard bicycle sizes are kept unchanged, together with the distances between central movement and pinion axis, wheels and pedals. The system can therefore be installed on all bicycles and mountain bikes with a simple modification to the frame, which will necessarily have to provide for the upward translation of the lower forks of the rear carriage. The enclosed drawings show, only as a demonstration of the global functionalities of the invention, a hypothetical bicycle frame which, being based on a traditional scheme with triangles, has infinite solutions for the frame. The lateral sliding mechanism of the chain has an industrial application, since it can be easily manufactured and assembled.

The system is based on the lateral sliding of a mobile crown, which moves on rails placed longitudinally to the sliding axis, and follows the lateral displacement of the chain on the rear pinion of the bicycle. The lateral sliding of the mobile crown therefore automatically occurs, due to the lateral force transmitted by the displacement of the rear speed gear coupled with the rotation movement of the system, in addition to the tensioning of the chain produced by the spring of the chain tightening device of the speed gear itself; these factors therefore produce the alignment action of the chain in a smooth and regular way. For the system operation, the subdivision of the traction chain is provided: the first chain operates from the front crown to the fixed crown (or double crown in case of mountain bike) of the mechanism (direct traction), the second chain from the mobile laterally sliding crown of the mechanism to the pinion pack (indirect or dragging traction).

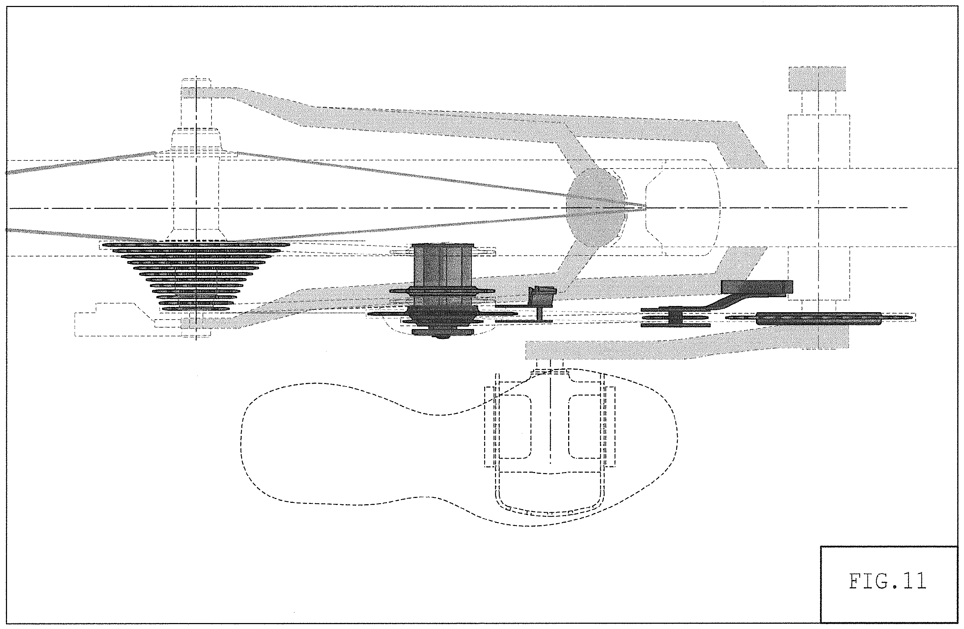

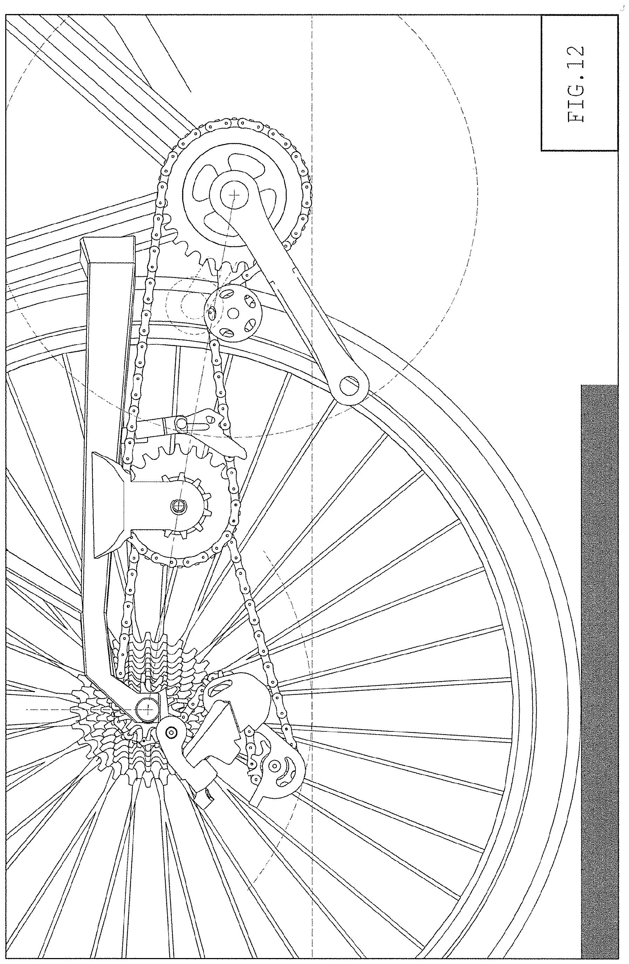

The crowns of the mechanism rotate around their central axis, and the force of the first crown (fixed) is transmitted to the second crown (mobile) by means of the sliding rails. For the mountain bike version, since ratios included between 4.0 and 0.67 are necessary, the system is equipped with a double fixed crown with derailing device, in which the smaller crown operates as multiplier and the bigger crown as reducer. The derailing device is placed in the lower part of the fixed double crown and operates on the "unloaded chain", in the space included between chain and rear wheel. The chain tightening device is placed as edge to the front crown with upwards tensioning rotation, as can be seen in Figures 11 and 12.

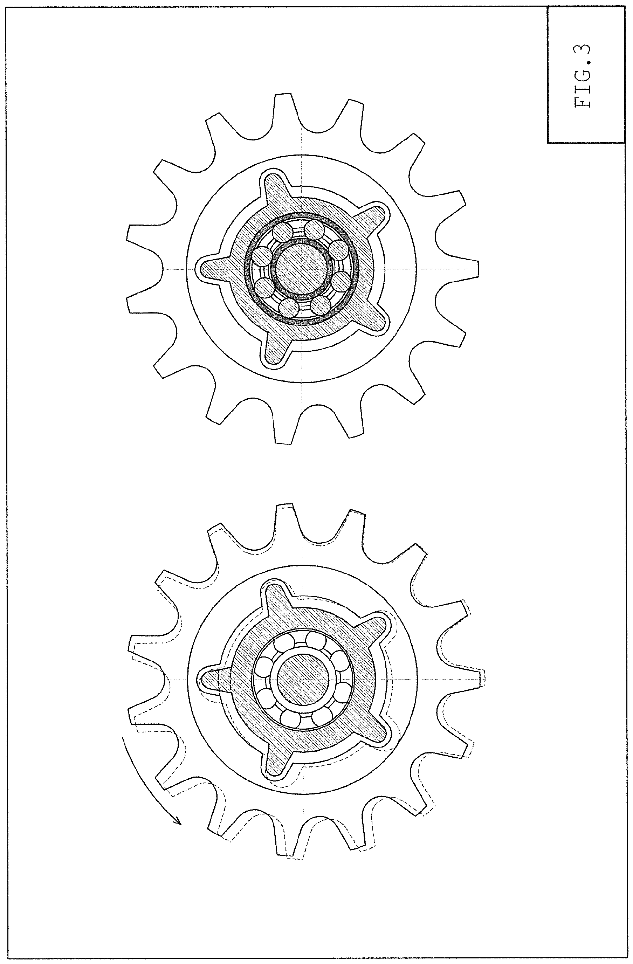

The lateral sliding of the mobile crown occurs on rails with round head, on which the round saddles of the mobile crown are housed; roundness guarantees the minimum contact surface between the parts, reducing friction and removing contrary effect to sliding, generated by the compression of the tensioned chain which pushes on the crown and on the sliding rails. The side thrust force is decidedly greater than the friction force and sliding is further enabled by the rotary action of the system. The saddles of the mobile crown provide for a detachment from the rails of about 0.2 mm (see Figure 3, section 1).

In the mountain bike version, the detachment between saddles and rails can be further limited to 0.05 mm to avoid phenomena of excessive small vertical jumps or side movements.

The sliding rails, being a single body with the fixed traction crown, smoothly and homogeneously transfer the rotation force to the mobile crown.

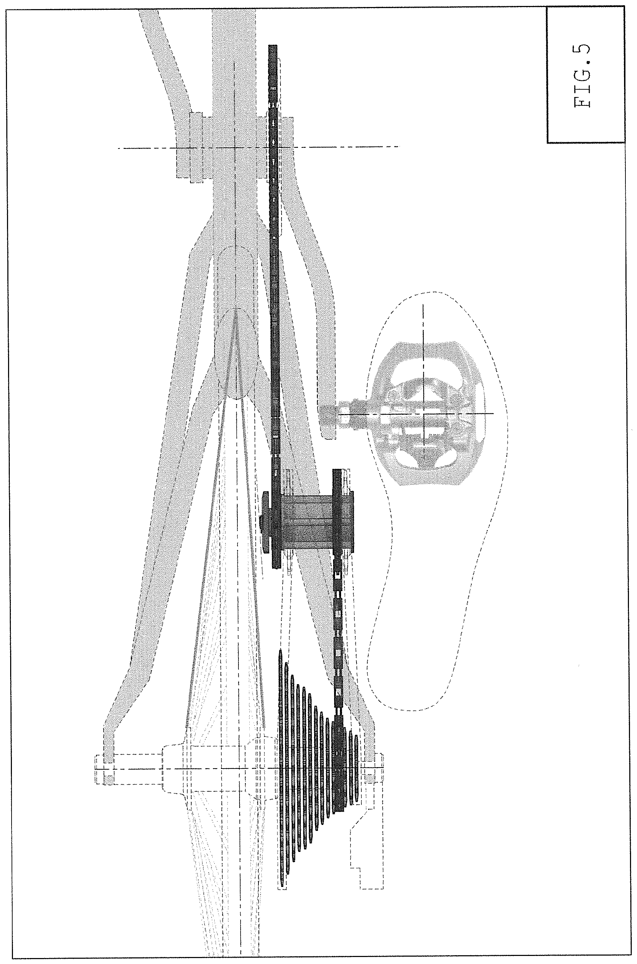

Figure 5 shows the distances from mechanical components, such as wheel spokes, from the rotation radius of the pedal, from the cyclist's foot movement.

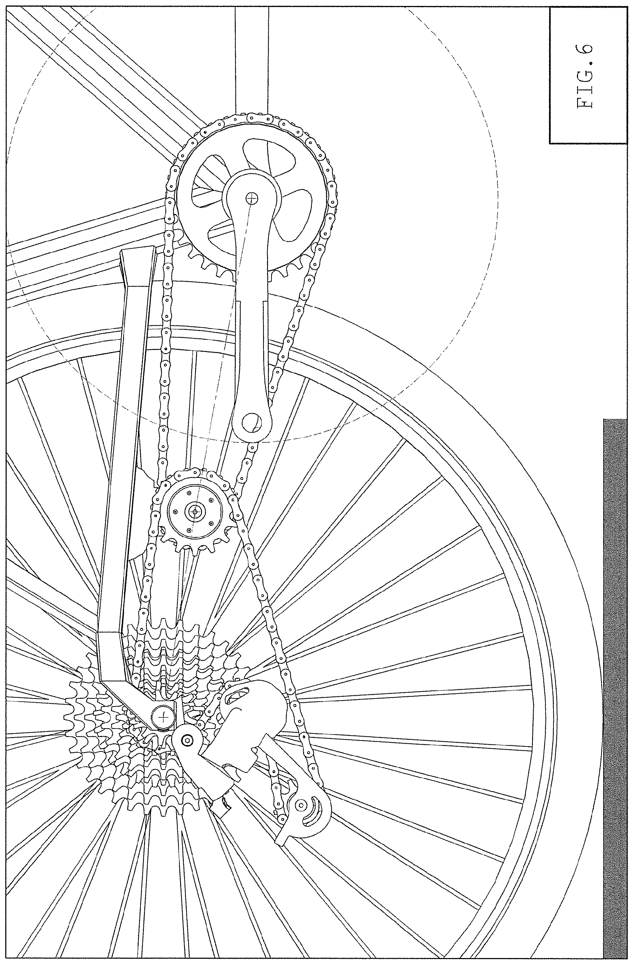

The distance of the mechanism axis from the rear wheel axis changes due to the frame sizes, and consequently the crank length: in the drawing, the distance of mechanical components from the rotation radius of the crank is about 20 mm (see Figure 6) .

In order to reduce to a minimum the sliding mechanism sizes, the lateral stroke of the crown is sized by computing an axle displacement of the chain, only on the two extreme ratios of 6 mm, equal to 4% of obliqueness (or, in case of a mountain bike, of 4.5 mm, equal to 3.5% of obliqueness), which guarantees the absence of lateral friction on the chain.

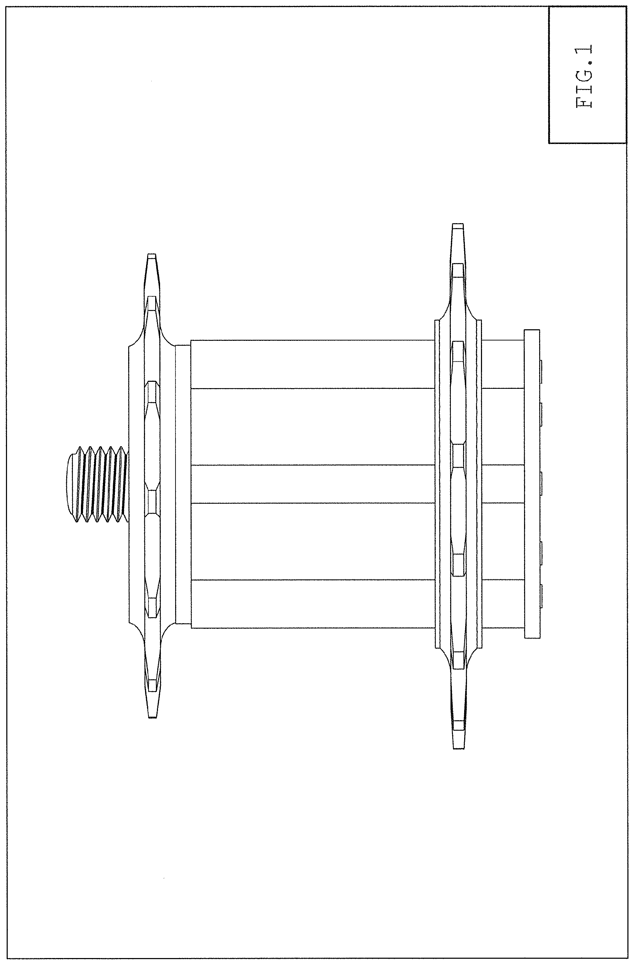

The mobile crown has a lateral stroke of 43 mm (mountain bike: 38 mm), computed for a rear pinion with 12/14 speeds; naturally, the stroke could be increased or reduced by inserting pinions with a greater or smaller number of crowns, or to reduce or completely remove the obliqueness also on the 2 extreme ratios (see Figures 5 and 11). The mechanism measures a total depth as plan of 61 mm, 55 mm measured from the fastening bracket to the frame (Figures 1, 5 and 8), of 75 mm (mountain bike: 84.5 mm) from the bicycle axis, and its placement corresponds to the central area of a foot plant, area with smallest interference with the foot itself in its rotary movement.

As regards the version for race bicycle, the mechanism, having also a multiplication function, uses on its central movement a small sized crown, which produces on the traction chain a quite greater force due to the reduction of the negative arm, and consequently the pickup will be higher and more direct.

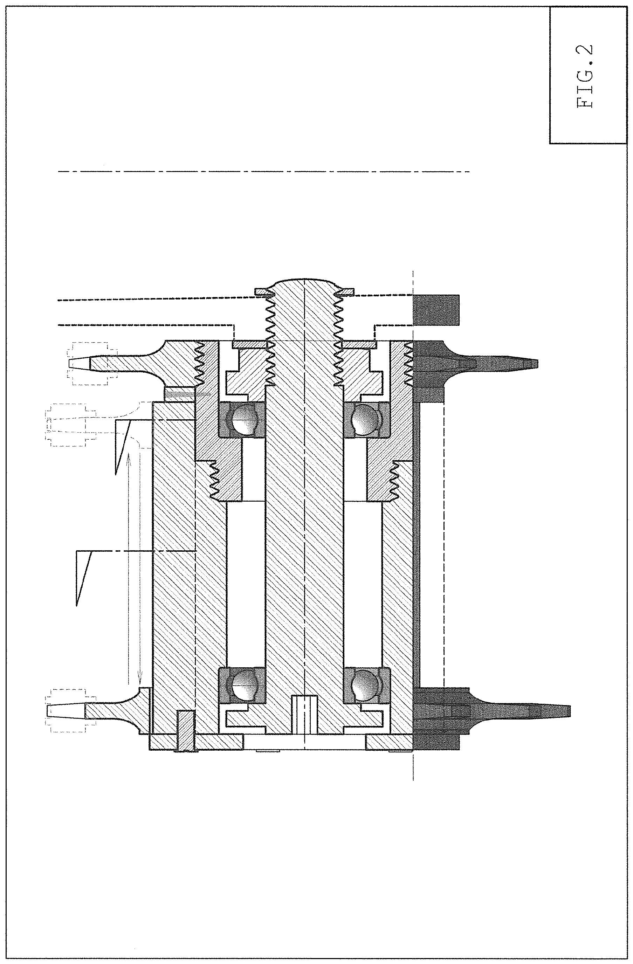

For example, the 32-type front crown with an intermediate fixed 11-type crown, which has a multiplication function and which passes the force on the 16-type crown, corresponds to a front 47-type crown: therefore, the pickup obtained with a 47-type crown, whichever the rear ratio, is decidedly lower than the one obtained with a 32-type one. The mobile crown can be replaced by extracting it from the sliding rails, simply unscrewing the fastening screws of the external ring nut of the stroke stopper, therefore allowing to modify the available range of ratios in an extremely simple way. Te insertion of a number of rear ratios (14 or more) provides for the widening of the abutment of the small fork on the rear hub: a 150/162 mm hub will therefore have to be assembled, while the central movement can also be of the standard 68 mm type. Figures 2-3 show the longitudinal section and the cross sections of the mechanism, with related dimensioning of the components. As regards the part related to ratios which can be obtained from the system, only as an example the following are reached:
- 32-type front crown, 11-type fixed, 16-type mobile, pinion pack 9/36 = range of ratios 5.17/1.29.
- 32-type front crown, 11-type fixed, 15-type mobile, pinion pack 9/32 = range of ratios 4.84/1.36
- 33-type front crown, 12-type fixed, 16-type mobile, pinion pack 9/31 = range of ratios 4.88/1.41
- 33-type front crown, 12-type fixed, 15-type mobile, pinion pack 9/31 = range of ratios 4.58/1.33.

As regards the mountain bike version, the mutually axial front crown and the chain tightening device are preferably placed in line with the centre of the two fixed crowns, the axis displacement of the traction chain being 2.5 mm, equal to 1% of obliqueness on the traction, namely practically null. The technical solution, which is innovative in this field, applied to the system, allows obtaining ratios of 4.09/0.66 by arranging a simple 9/28 pinion pack with 12 ratios, making therefore possible to apply a speed gear with very short rod, which therefore allows increasing the distance from ground of the speed gear mechanism.

As regards the part related to ratios which can be obtained, as an example the following are reached:
- 27-type front crown, 11-type and 22-type fixed, 15-type mobile, pinion pack 9/28 = range of ratios 4.09/1.31-2.04/0.66.

The enclosed drawings verify the system by using standard, commonly marketed components, such as the tread width equal to 62 mm, the abutment of the small fork on the rear carriage, which needs a 142/150 mm hub, while the central movement can be standard.

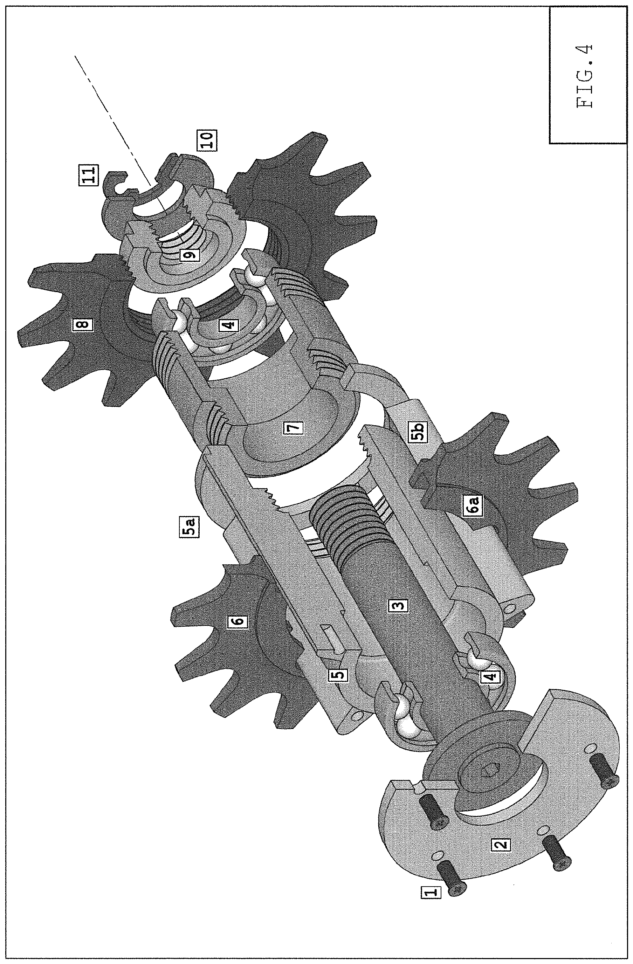

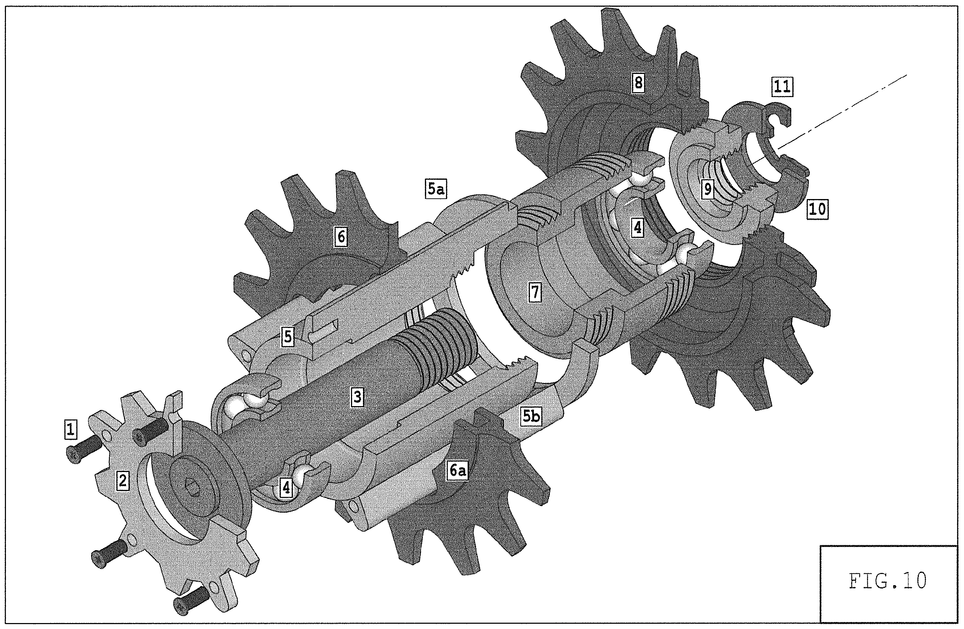

With reference now to Figures 4 and 10, the major mechanical component of the system of the invention will be described, the version applied to a mountain bike being different from the one applied to a race bicycle only regarding exterior parts, for components 2 and 8.

The exploded view of Figures 4 and 10 shows all single pieces: the mechanism is blocked on a central pin (3), preferably made of steel whose diameter is 10 mm, which is screwed onto the supporting bracket of the bicycle frame. The length of the central pin which works as a shelf is preferably only of 55 mm, as guarantee of the stiffness and absence of possible bending.

The whole mechanism rotates on the central pin through the two ball or roller bearings (4) placed at its ends, as guarantee of the perfect rotation and friction reduction; the housing tubular device of the bearings made of steel or light alloy to reduce its weight is divided into two parts mutually screwed and fastened by a blocking screw, can also be made in a single body; on part of the tubular device (7) the fixed crown (or double crown) (8) is screwed, on the other part (5) the sliding rails (5b) of the mobile crown (6) are housed.

The tubular device can therefore b unscrewed and easily assembled and disassembled for cleaning or replacing the bearings. The bearings are tightened on the suitable internal seat of the tubular device, by the nut made of steel (9) which, being screwed onto the central pin, enables the complete blocking of the mechanism. The mechanism is fastened to the frame through an Allen key with external stopper spring (11) to the bracket of the frame or any other blocking system.

The fixed crown (8) is fastened to the tubular device (7) of the mechanism through screwing till the end of stroke. The mobile crown (6) and the sliding rails (5b) are preferably made of steel or light alloy as guarantee of a greater smoothness and endurance. The mobile crown (6) slides with a distance from the tubular device of 2.5 mm, and the sliding rails transfer the rotation force on the saddles of the mobile crown (6a), pushing on the saddle recess. The stroke stopper in the internal side (5a) is part of the rails themselves, while in the external side is exerted by the removable lock nut made of steel (2), fastened through screws (1) screwed to the five rails. The maximum spunto and traction force transferred by the front chain to the fixed crown is transmitted in the sturdier part next to the system fastening bracket. The rotation speeds of the mechanism during a race reach 180/300 revolutions/minute, and the tangential acceleration force present on the mechanism rails will tend to completely eliminate deposits of water or dirt.

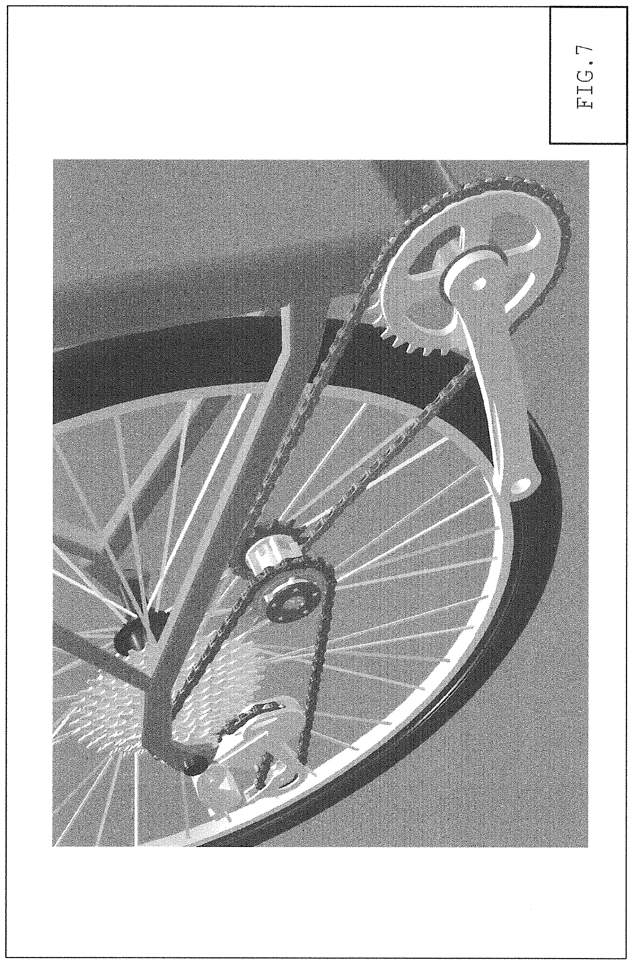

With the above described solution, the invention therefore deals, with reference to Figures 1 to 7, in a first preferred embodiment, with a race bicycle comprising:
- a supporting frame;
- a pedal assembly connected to the supporting frame, composed of two pedals and a first toothed wheel interposed therebetween, around which a first chain is operatively placed;
- a pinion pack connected to the supporting frame, composed of at least two second toothed wheels around which a second chain is operatively placed, the displacement of the second chain on one of the toothed wheels occurring through a speed gear; at least one laterally sliding system placed between the pedal assembly and the pinion pack, wherein the laterally sliding system is composed of a mechanism equipped with:
- at least one third toothed wheel (8) around which the first chain is operatively placed;
- at least one fourth toothed wheel (6) around which the second chain is operatively placed, the fourth toothed wheel (6) being integrally rotating with the third toothed wheel (8) ; and
- at least one rail (5a, 5b) to which the fourth toothed wheel (6) is operatively connected, the rail (5a, 5b) having a longitudinal axis which is parallel to the rotation axis of the first, second, third and fourth toothed wheels (8, 6), the fourth toothed wheel (6) being adapted to slide along the rail (5a, 5b) following the displacement of the second chain on one of the second toothed wheels after a speed change operation, in order to keep the rotation plan of the second chain substantially parallel to the plane of the supporting body.

Innovatively, the fourth toothed wheel (6) is adapted to automatically laterally slide, due to the lateral force transmitted by the displacement of the rear speed gear, coupled with the rotary movement of the system, in addition to the tensioning of the second chain produced by the spring of the chain tightening device of the speed gear itself; these factors therefore produce the alignment action of the second chain, in a smooth and regular way.

Moreover, the fourth toothed wheel (6) is adapted to laterally slide on two rails with round head (5a, 5b), in which the round saddles (6a) of the fourth toothed wheel (6) are housed, the roundness guaranteeing the minimum contact surface between the parts, reducing friction and the effect of the contrary force to sliding, due to compression of the tensioned second chain which pushes on the fourth toothed wheel (6) and on the sliding rails (5a, 5b).

In particular, the laterally sliding system is further composed of a mechanism blocked on a central pin (3) made of steel, adapted to be screwed onto the supporting bracket of the bicycle frame, the whole mechanism rotating on the central pin (3) through at least two ball bearings (4), the housing tubular device of the bearings (4), preferably made of steel or light alloy for reducing its global weight, being divided into two parts mutually screwed and fastened by a blocking screw, the third toothed wheel (8) being screwed on a first part (7) of the tubular device, the sliding rails (5b) of the fourth toothed wheel (6) being housed on a second part (5) of the tubular device, the mechanism being fastened to the frame with at least one stopper spring (11) external to the bracket of the frame, the third toothed wheel (8) being fastened to the first part (7) of the tubular device of the mechanism through screwing till the end of stroke, the fourth toothed wheel (6) and the sliding rails (5a, 5b) being preferably made of steel or light alloy, the stroke stopper in the internal side of a rail (5a) being part of the rails themselves, while in the external side it is exerted by a removable lock nut (2), fastened through screws (1) screwed to the rails.

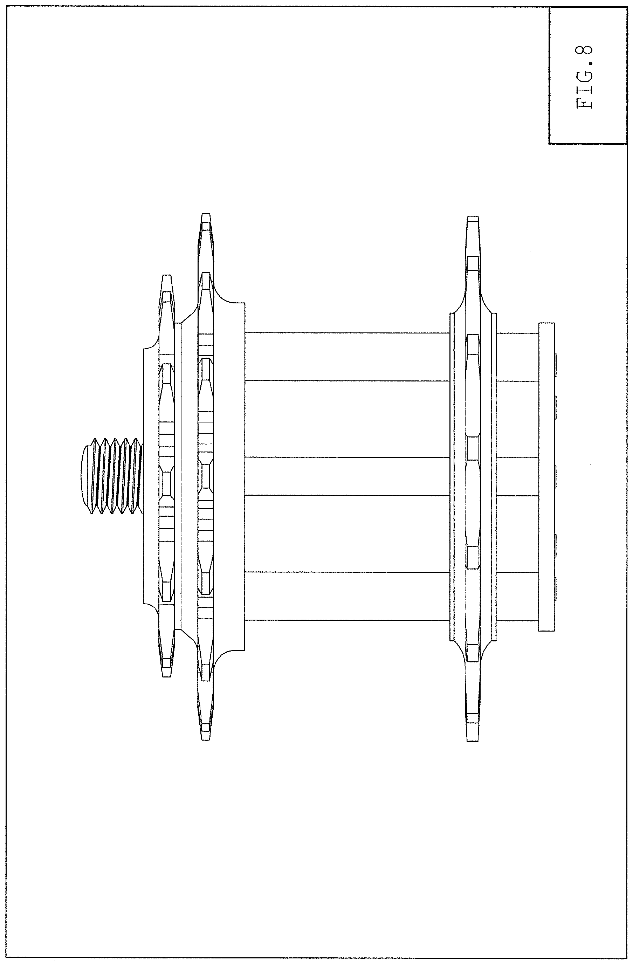

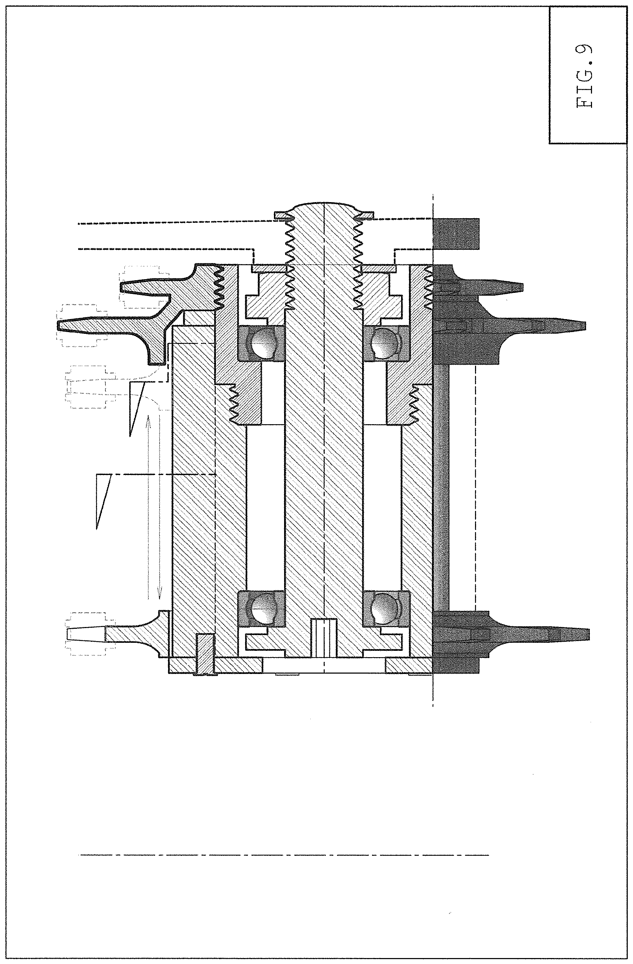

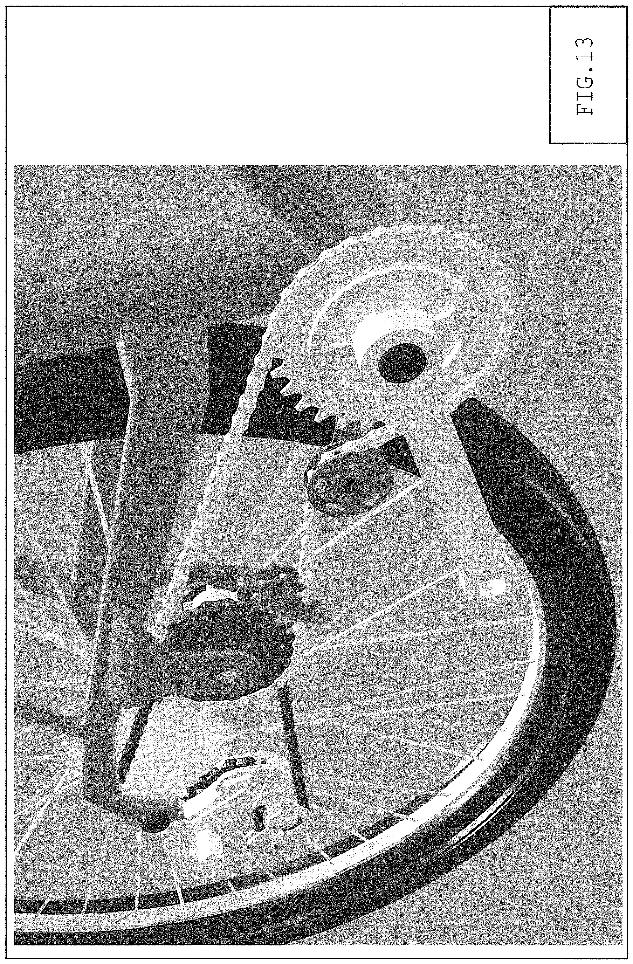

With the above described solution, the invention further deals, with reference to Figures 8 to 13, in a second preferred embodiment, with a bicycle of the mountain bike type comprising:
- a supporting frame;
- a pedal assembly connected to the supporting frame, composed of two pedals and a first toothed wheel interposed therebetween, around which a first chain is operatively placed; and
- a pinion pack connected to the supporting frame, composed of at least two second toothed wheels around which a second chain is operatively placed, the displacement of the second chain on one of the toothed wheels occurring through a speed gear;

Innovatively, the bicycle further comprises at least one laterally sliding system placed between the pedal assembly and the pinion pack, such laterally sliding system being composed of a mechanism equipped with:
- at least one third toothed wheel (8) around which the first chain is operatively placed;
- at least one fourth toothed wheel (6) around which the second chain is operatively placed, the fourth toothed wheel (6) being integrally rotating with the third toothed wheel (8) ;
- at least one rail (5a, 5b) to which the fourth toothed wheel (6) is operatively connected, the rail (5a, 5b) having a longitudinal axis which is parallel to the rotation axis of the first, second, third and fourth toothed wheels (8, 6), the fourth toothed wheel (6) being adapted to slide along the rail (5a, 5b) following the displacement of the second chain on one of the second toothed wheels after a speed change operation, in order to keep the rotation plan of the second chain substantially parallel to the plane of the supporting frame;
- at least one fifth toothed wheel, whose diameter is lower than the third toothed wheel (8) and placed adjacent to the third toothed wheel (8), the fifth toothed wheel operating as speed multiplier, the third toothed wheel (8) operating as speed reducer;
- at least one sixth toothed wheel as chain tightening device placed in contact with the first chain, placed between the first toothed wheel and the third/fifth toothed wheel (8) and having an upwards tensioning rotation; and
- a derailing element placed between the third/fifth toothed wheel (8) and the sixth toothed wheel as chain tightening device, in order to get in contact with the lower stroke of the first chain when the first chain is in an unloaded status, namely free from tension.

In particular, the fourth toothed wheel (6) is adapted to automatically laterally slide, due to the lateral force transmitted by the displacement of the rear speed gear, coupled with the rotary movement of the system, in addition to the tensioning of the second chain produced by the spring of the chain tightening device of the speed gear itself, factors which generate therefore the alignment action of the second chain.

Moreover, the fourth toothed wheel (6) is adapted to laterally slide on two rails with round head (5a, 5b), on which the round saddles (6a) of the fourth toothed wheel (6) are housed, the roundness guaranteeing the minimum contact surface between the parts, reducing friction and the effect of the contrary force to sliding, due to compression of the tensioned second chain which pushes on the fourth toothed wheel (6) and on the sliding rails (5a, 5b).

Preferably, the laterally sliding system is further composed of a mechanism blocked on a central pin (3) made of steel, adapted to be screwed onto the supporting bracket of the bicycle frame, the whole mechanism rotating on the central pin (3) through at least two ball bearings (4), the housing tubular device of the bearings (4), preferably made of steel or light alloy to reduce its weight, being divided into two parts mutually screwed and fastened by a blocking screw, the third and the fifth toothed wheel (8) being screwed on a first part (7) of the tubular device, the sliding rails (5b) of the fourth toothed wheel (6) being housed in a second part (5) of the tubular device, the mechanism being fastened to the frame with at least one stopper spring (11) external to the bracket of the frame, the third and the fifth toothed wheel (8) being fastened to the first part (7) of the tubular device of the mechanism through screwing till the end of stroke, the fourth toothed wheel (6) and the sliding rails (5a, 5b) being preferably made of steel or light alloy, the stroke stopper in the internal side of a rail (5a) being part of the rails themselves, while in the external side it is exerted by a removable lock nut (2), fastened through screws (1) screwed to the rails (5a, 5b).

The benefits deriving from the above described laterally sliding system are as follows:
- eliminating the chain obliqueness;
- inserting 12/14 or more ratios on the pinion pack;
- using a single crown on the central movement: therefore, without the front speed gear, the stroke operation is modular, facilitated and progressive;
- using all ratios which can be applied on the rear pinion;
- transmitting the force with a chain always axial with the bicycle;
- having more pickup power due to a small front crown;
- reducing the distance between the pedals Q factor, much below what has been so far possible;
- eliminating the chain jumping with the inconvenience of the chain dislodgement in front;
- for the mountain bike, applying a "short rod" speed gear, which allows increasing the distance from ground of the apparatus, reducing the chance of damaging the speed gear itself;
- for the mountain bike, inserting the derailing device into the lower part of the chain, with the "unloaded chain zone" which creates a smaller lateral friction;
- for the mountain bike, obtaining a range of ratios 4.09/0.66 using a 9/28 pinion with short rod speed gear;
- for the mountain bike, being able to insert rear wheels with tread increased to 70/80 mm on standard 142 mm rear hubs.

## Claims

1. Bicycle comprising:
- a supporting frame;
- a pedal assembly connected to said supporting frame, composed of two pedals and a first toothed wheel interposed therebetween, around which a first chain is operatively placed;
- a pinion pack connected to said supporting frame, composed of at least two second toothed wheels around which a second chain is operatively placed, the displacement of said second chain on one of said at least two second toothed
wheels occurring through a speed gear;
**characterized in that**, at least one laterally sliding system placed between said pedal assembly and said pinion pack, said laterally sliding system being composed of a mechanism equipped with:
- at least one third toothed wheel (8) around which said first chain is operatively placed;
- at least one fourth toothed wheel (6) around which said second chain is operatively placed, said fourth toothed wheel (6) being integrally rotating with said third toothed wheel (8); and
- at least one rail (5a, 5b) to which said fourth toothed wheel is operatively connected (6), said rail (5a, 5b) having a longitudinal axis which is parallel to the rotation axis of said first, second, third and fourth toothed wheels (8, 6), said fourth toothed wheel (6) being adapted to slide along said rail (5a, 5b) following the displacement of said second chain on one of said second toothed wheels after a speed change operation, in order to keep the rotation plan of said second chain substantially parallel to the plane of said supporting frame,
said fourth toothed wheel (6) is adapted to automatically laterally slide, due to the lateral force transmitted by the displacement of the speed gear coupled with the rotary action of the system, in addition to the tensioning of the second chain produced by a spring of a chain tightening device of the speed gear itself, factors which generate therefore the automatic alignment action of the second chain in a smooth and regular way.

2. Bicycle according to claim 1, **characterized in that** said fourth toothed wheel (6) is adapted to laterally slide on two rails with round head (5a, 5b), in which round saddles (6a) of the fourth toothed wheel (6) are housed, the roundness guaranteeing the minimum contact surface between the parts, reducing friction and the effect of the contrary force to sliding, due to compression of the tensioned second chain which pushes on the fourth toothed wheel (6) and on the sliding rails (5a, 5b).

3. Bicycle according to claim 1 or 2, **characterized in that** said laterally sliding system is further composed of a mechanism blocked on a central pin (3) made of steel, adapted to be screwed onto a supporting bracket of the bicycle frame, the whole mechanism rotating on the central pin (3) through at least two ball bearings (4), a housing tubular device of the bearings (4), preferably made of steel or light alloy for reducing its global weight, being divided into two parts mutually screwed and fastened by a blocking screw, and being also able to be made in a single body, the third toothed wheel (8) being screwed on a first part (7) of the tubular device, the sliding rails (5b) of the fourth toothed wheel (6) being housed in a second part (5) of the tubular device, the mechanism being fastened to the frame with at least one stopper spring (11) external to the supporting bracket, the third toothed wheel (8) being fastened to the first part (7) of the tubular device of the mechanism through screwing till the end of stroke, the fourth toothed wheel (6) and the sliding rails (5a, 5b) being preferably made of steel or light alloy, a stroke stopper in the internal side of a rail (5a) being part of the rails themselves, while in the external side it is exerted by a removable lock nut (2), fastened through screws (1) screwed to the rails.

4. Bicycle comprising:
- a supporting frame;
- a pedal assembly connected to said supporting frame, composed of two pedals and a first toothed wheel interposed therebetween, around which a first chain is operatively placed; and
- a pinion pack connected to said supporting frame, composed of at least two second toothed wheels around which a second chain is operatively placed, the displacement of said second chain on one of said second toothed
wheels occurring through a speed gear;
**characterized in that** it further comprises at least one laterally sliding system placed between said pedal assembly and said pinion pack, said laterally sliding system being composed of a mechanism equipped with:
- at least one third toothed wheel (8) around which said first chain is operatively placed;
- at least one fourth toothed wheel (6) around which said second chain is operatively placed, said fourth toothed wheel (6) being integrally rotating with said third toothed wheel (8);
- at least one rail (5a, 5b) to which said fourth toothed wheel is operatively connected (6), said rail (5a, 5b) having a longitudinal axis which is parallel to the rotation axis of said first, second, third and fourth toothed wheels (8, 6), said fourth toothed wheel (6) being adapted to slide along said at least one rail (5a, 5b) following the displacement of said second chain to one of said second toothed wheels after a speed change operation, in order to keep the rotation plan of said second chain substantially parallel to the plane of said supporting frame;
- at least one fifth toothed wheel, whose diameter is less than said third toothed wheel (8) and placed adjacent to said third toothed wheel (8), said fifth toothed wheel operating as speed multiplier, said third toothed wheel (8) operating as speed reducer;
- at least one sixth toothed wheel as chain tightening device placed in contact with said first chain, placed between said first toothed wheel and said third/fifth toothed wheel (8) and having an upwards tensioning rotation; and
- a derailing element placed between said third/fifth toothed wheel (8) and said sixth toothed wheel as chain tightening device, in order to get in contact with the lower stroke of said first chain when said first chain is in a unloaded status, namely free from tension.

5. Bicycle according to claim 4, **characterized in that** said fourth toothed wheel (6) is adapted to automatically laterally slide, due to the lateral force transmitted by the displacement of the speed gear, coupled with the rotary movement of the system, in addition to the tensioning of the second chain produced by the spring of the chain tightening device of the speed gear itself, which will produce therefore the automatic alignment action of the second chain in a smooth and regular way.

6. Bicycle according to claim 4 or 5, **characterized in that** said fourth toothed wheel (6) is adapted to laterally slide on two rails with round head (5a, 5b), in which round saddles (6a) of the fourth toothed wheel (6) are housed, the roundness guaranteeing the minimum contact surface between the parts, reducing friction and the effect of the contrary force to sliding, due to compression of the tensioned second chain which pushes on the fourth toothed wheel (6) and on one of at least one rail (5a, 5b).

7. Bicycle according to any one of claims 4, 5 or 6, **characterized in that** said laterally sliding system is further composed of a mechanism blocked on a central pin (3) made of steel, adapted to be screwed onto supporting bracket of the bicycle frame, the whole mechanism rotating on the central pin (3) through at least two ball bearings (4), a housing tubular device of said bearings (4), preferably made of steel or light alloy for reducing its global weight, being divided into two parts mutually screwed and fastened by a blocking screw, and being also able to be made in a single body, the third and the fifth toothed wheel (8) being screwed on a first part (7) of the tubular device, the sliding rails (5b) of the fourth toothed wheel (6) being housed in a second part (5) of the tubular device, the mechanism being fastened to the frame with at least one stopper spring (11) external to the bracket of the frame, the third and the fifth toothed wheel (8) being fastened to the first part (7) of the tubular device of the mechanism through screwing till the end of stroke, the fourth toothed wheel (6) and the sliding rails (5a, 5b) being preferably made of steel or light alloy, the stroke stopper in the internal side of a rail (5a) being part of the rails themselves, while in the external side it is exerted by a removable lock nut (2), fastened through screws (1) screwed to the at least one rail (5a, 5b).

8. Bicycle according to any one of the previous claims, **characterized in that** said pinion pack has a speed gear at least with two speeds, and preferably with twelve speeds or more.

## Patentansprüche

1. Fahrrad, das Folgendes enthält:
- ein Gestell;
- einen Pedalantrieb, der mit dem genannten Gestell verbunden ist und aus zwei Pedalen und einem ersten zwischen diesen angebrachten Zahnrad besteht, in dessen Bereich operativ eine erste Kette angebracht wird;
- ein Ritzelpaket, das mit dem genannten Stützrahmen verbunden ist, welches aus mindestens zwei zweiten Zahnrädern besteht, in deren Bereich operativ eine zweite Kette angebracht wird, die Verschiebung der genannten zweiten Kette auf einem der genannten mindestens zwei zweiten Zahnräder erfolgt durch ein Schaltgetriebe;
und durch mindestens ein seitliches Gleitsystem gekennzeichnet ist, das zwischen dem genannten Pedalantrieb und dem genannten Ritzelpaket angebracht ist, das genannte seitliche Gleitsystem besteht aus einem Mechanismus, der mit Folgendem ausgestattet ist:
- mindestens ein drittes Zahnrad (8), in dessen Bereich operativ die genannte erste Kette angebracht wird;
- mindestens ein viertes Zahnrad (6), in dessen Bereich operativ die genannte zweite Kette angebracht wird, das genannte vierte Zahnrad (6) dreht sich einteilig mit dem genannten dritten Zahnrad (8); und
- mindestens eine Schiene (5a, 5b), mit der operativ das genannte vierte Zahnrad (6) verbunden wird, die genannte Schiene (5a, 5b) hat eine Längsachse, die parallel zur Drehachse des genannten ersten, zweiten, dritten und vierten Zahnrades (8, 6) ist, das genannte vierte Zahnrad (6) dient dazu, infolge der Verschiebung der genannten zweiten Kette auf einem der genannten zweiten Zahnräder nach einem Gangwechsel längs der genannten Schiene (5a, 5b) zu gleiten, sodass die Drehfläche der genannten zweiten Kette grundlegend parallel zur Fläche des genannten Stützkörpers gehalten wird,
das genannte vierte Zahnrad (6) dient dazu, aufgrund der seitlichen Kraft automatisch seitlich zu gleiten, die von der Verschiebung des Ganghebels zusammen mit der Drehwirkung des Systems sowie der Spannung der zweiten Kette übertragen wird, die durch eine Feder des Kettenspanners dieses Schaltgetriebes erzeugt wird, Faktoren, die daher die automatische Ausrichtungswirkung der zweiten Kette gleichmäßig und regelmäßig erzeugen.

2. Fahrrad gemäß Patentanspruch 1, das **dadurch gekennzeichnet ist, dass** das genannte vierte Zahnrad (6) dazu dient, seitlich auf zwei Schienen mit rundem Kopf (5a, 5b) zu gleiten, auf denen runde Sättel (6a) des vierten Zahnrades (6) liegen, die Rundungen garantieren eine minimale Kontaktfläche der Teile, und reduzieren die Reibung und die Wirkung der Gegenkraft auf das Gleiten, die auf den Druck der zweiten unter Spannung stehenden Kette zurückzuführen ist, die auf das vierte Zahnrad (6) und auf die Gleitrollen (5a, 5b) drückt.

3. Fahrrad gemäß Patentanspruch 1 oder 2, das **dadurch gekennzeichnet ist, dass** das genannte seitliche Gleitsystem außerdem aus einem Mechanismus besteht, der an einem mittleren Bolzen (3) aus Stahl blockiert ist, welcher dazu dient, an einen Haltebügel des Fahrradgestells angeschraubt zu werden, am mittleren Bolzen (3) dreht sich der gesamte Mechanismus durch mindestens zwei Kugellager (4), ein Aufnahmerohr der Lager (4), vorzugsweise aus Stahl oder Leichtmetalllegierung, um ihr Gesamtgewicht zu reduzieren, ist in zwei aneinander geschraubte Teile aufgeteilt und wird durch eine Sperrschraube gesperrt, und kann außerdem in nur einem Körper ausgeführt werden, an einem ersten Teil (7) des Rohres ist das dritte Zahnrad (8) angeschraubt, an einem zweiten Teil (5) des Rohres sind die Gleitschienen (5b) des vierten Zahnrades (6) angebracht, der Mechanismus ist am Gestell mit mindestens einer Feststellfeder (11) befestigt, die außerhalb des Haltebügels liegt, das dritte Zahnrad (8) ist am ersten Teil (7) des Rohres des Mechanismus durch Anschrauben bis zum Anschlag befestigt, das vierte Zahnrad (6) und die Gleitschienen (5a, 5b) sind vorzugsweise aus Stahl oder einer Leichtmetalllegierung hergestellt, der Anschlag in der Innenseite einer Schiene (5a) ist Teil dieser Schienen, während er auf der Außenseite eine entfernbare Nutmutter (2) ist, die durch Schrauben (1) befestigt ist, welche an den Schienen angeschraubt sind.

4. Fahrrad, das Folgendes enthält:
- ein Gestell;
- einen Pedalantrieb, der mit dem genannten Gestell verbunden ist und aus zwei Pedalen und einem ersten zwischen diesen angebrachten Zahnrad besteht, in dessen Bereich operativ eine erste Kette angebracht wird; und
- ein Ritzelpaket, das mit dem genannten Stützrahmen verbunden ist, welches aus mindestens zwei zweiten Zahnrädern besteht, in deren Bereich operativ eine zweite Kette angebracht wird, die Verschiebung der genannten zweiten Kette auf einem der genannten zwei zweiten Zahnräder erfolgt durch ein Schaltgetriebe;
und **dadurch gekennzeichnet ist, dass** es außerdem mindestens ein seitliches Gleitsystem enthält, das zwischen dem genannten Pedalantrieb und dem genannten Ritzelpaket angebracht ist, das genannte seitliche Gleitsystem besteht aus einem Mechanismus, der mit Folgendem ausgestattet ist:
- mindestens ein drittes Zahnrad (8), in dessen Bereich operativ die genannte erste Kette angebracht wird;
- mindestens ein viertes Zahnrad (6), in dessen Bereich operativ die genannte zweite Kette angebracht wird, das genannte vierte Zahnrad (6) dreht sich einteilig mit dem genannten dritten Zahnrad (8); und
- mindestens eine Schiene (5a, 5b), mit der operativ das genannte vierte Zahnrad (6) verbunden wird, die genannte Schiene (5a, 5b) hat eine Längsachse, die parallel zur Drehachse des genannten ersten, zweiten, dritten und vierten Zahnrades (8, 6) ist, das genannte vierte Zahnrad (6) dient dazu, infolge der Verschiebung der genannten zweiten Kette auf einem der genannten zweiten Zahnräder nach einem Gangwechsel längs der genannten mindestens einen Schiene (5a, 5b) zu gleiten, sodass die Drehfläche der genannten zweiten Kette grundlegend parallel zur Fläche des genannten Stützrahmens gehalten wird,
- mindestens ein fünftes Zahnrad mit einem kleineren Durchmesser als das dritte Zahnrad (8), das neben dem genannten dritten Zahnrad (8) angebracht ist, das genannte fünfte Zahnrad dient als Übersetzungsgetriebe, das genannte dritte Zahnrad (8) dient als Untersetzungsgetriebe;
- mindestens ein sechstes Kettenspanner-Zahnrad, das in Kontakt mit der genannten ersten Kette gebracht wird, welche zwischen dem genannten ersten Zahnrad und dem genannten dritten/fünften Zahnrad (8) angebracht ist und eine Spanndrehung nach oben hat; und
- ein Element der Kettenschaltung, das zwischen dem dritten/fünften Zahnrad (8) und dem sechsten Kettenspanner-Zahnrad positioniert ist, um mit dem unteren Lauf der genannten ersten Kette in Kontakt zu kommen, wenn die genannte erste Kette in einem Entspannungszustand ist, d. h. ohne Spannung.

5. Fahrrad gemäß Patentanspruch 4, das **dadurch gekennzeichnet ist, dass** das genannte vierte Zahnrad (6) dazu dient, aufgrund der seitlichen Kraft automatisch seitlich zu gleiten, die von der Verschiebung des Ganghebels zusammen mit der Drehbewegung des Systems sowie der Spannung der zweiten Kette übertragen wird, die durch eine Feder des Kettenspanners dieses Schaltgetriebes erzeugt wird, was daher die automatische Ausrichtungswirkung der zweiten Kette gleichmäßig und regelmäßig erzeugt.

6. Fahrrad gemäß Patentanspruch 4 oder 5, das **dadurch gekennzeichnet ist, dass** das genannte vierte Zahnrad (6) dazu dient, seitlich auf zwei Schienen mit rundem Kopf (5a, 5b) zu gleiten, auf denen runde Sättel (6a) des vierten Zahnrades (6) liegen, die Rundungen garantieren eine minimale Kontaktfläche der Teile, und reduzieren die Reibung und die Wirkung der Gegenkraft auf das Gleiten, die auf den Druck der zweiten unter Spannung stehenden Kette zurückzuführen ist, die auf das vierte Zahnrad (6) und auf mindestens eine der Schienen (5a, 5b) drückt.

7. Fahrrad gemäß einem beliebigen der Patentansprüche 4, 5 oder 6, das **dadurch gekennzeichnet ist, dass** das genannte seitliche Gleitsystem außerdem aus einem Mechanismus besteht, der an einem mittleren Bolzen (3) aus Stahl blockiert ist, welcher dazu dient, an einen Haltebügel des Fahrradgestells angeschraubt zu werden, am mittleren Bolzen (3) dreht sich der gesamte Mechanismus durch mindestens zwei Kugellager (4), ein Aufnahmerohr der genannten Lager (4), vorzugsweise aus Stahl oder Leichtmetalllegierung, um ihr Gesamtgewicht zu reduzieren, ist in zwei aneinander geschraubte Teile aufgeteilt und wird durch eine Sperrschraube gesperrt, und kann außerdem in nur einem Körper ausgeführt werden, an einem ersten Teil (7) des Rohres sind das dritte und das fünfte Zahnrad (8) angeschraubt, an einem zweiten Teil (5) des Rohres sind die Gleitschienen (5b) des vierten Zahnrades (6) angebracht, der Mechanismus ist am Gestell mit mindestens einer Feststellfeder (11) befestigt, die außerhalb des Bügels des Rahmens liegt, das dritte und das fünfte Zahnrad (8) sind am ersten Teil (7) des Rohres des Mechanismus durch Anschrauben bis zum Anschlag befestigt, das vierte Zahnrad (6) und die Gleitschienen (5a, 5b) sind vorzugsweise aus Stahl oder einer Leichtmetalllegierung hergestellt, der Anschlag in der Innenseite einer Schiene (5a) ist Teil dieser Schienen, während er auf der Außenseite eine entfernbare Nutmutter (2) ist, die durch Schrauben (1) befestigt ist, welche an den Schienen angeschraubt sind.

8. Fahrrad gemäß einem beliebigen der vorhergehenden Patentansprüche, das **dadurch gekennzeichnet ist, dass** das genannte Ritzelpaket ein Schaltgetriebe mit mindestens zwei Gängen und vorzugsweise zwölf oder mehr Gängen hat.

## Revendications

1. Bicyclette comprenant :
- un cadre de support ;
- un groupe pédalier relié au cadre de support, composé de deux pédales et une première roue dentée interposée entre elles, autour de laquelle est placée opérationnellement une première chaîne ;
- un groupe de pignons relié au cadre de support, composé au moins de deux secondes roues dentée autour desquelles est placée opérationnellement une seconde chaîne, le déplacement de la seconde chaîne sur l'une des deux secondes roues dentées se produit en changeant de vitesse ;
**caractérisée** au moins par un système de glissement latéral, situé entre le groupe pédalier et le groupe de pignons, qui est composé d'un mécanisme doté de :
- au moins une troisième roue dentée (8) autour de laquelle est placée opérationnellement la première chaîne ;
- au moins une quatrième roue dentée (6), autour de laquelle est placée opérationnellement la seconde chaîne, dont la rotation est solidaire de la troisième roue dentée (8) ; et
- au moins un rail (5a, 5b) auquel est relié opérationnellement la quatrième roue dentée (6) ; ce rail (5a, 5b) possède un axe longitudinal qui est parallèle à l'axe de rotation de la première, seconde, troisième et quatrième roue dentée (8, 6) ; où la quatrième roue dentée (6) est apte à glisser le long du rail (5a, 5b) grâce au déplacement de la seconde chaîne sur l'une des secondes roues dentées après une opération de changement de vitesse, de sorte à maintenir le plan de rotation de la seconde chaîne substantiellement parallèle au plan du corps de support.
La quatrième roue dentée (6) est apte à glisser latéralement de manière automatique, grâce à la force latérale transmise par le déplacement de la cassette associé à l'action de rotation du système, en plus de la tension de la seconde chaîne produite par un ressort du tendeur de chaîne de la cassette, ces facteurs produisent par conséquent l'action d'alignement automatique de la seconde chaîne de manière uniforme et régulière.

2. Bicyclette, selon la revendication 1, **caractérisée en ce que** la quatrième roue dentée (6) est apte à glisser latéralement sur deux rails à tête ronde (5a, 5b), où se trouvent les sièges ronds (6a) de la quatrième roue dentée (6), dont les arrondis garantissent la surface minimale de contact entre les parties, en réduisant le frottement et l'effet de la force contraire au glissement, due à la compression de la seconde chaîne en tension qui pousse contre la quatrième roue dentée (6) et les rails de glissement (5a, 5b).

3. Bicyclette, selon la revendication 1 ou 2, **caractérisée en ce que** le système de glissement latéral est composé aussi d'un mécanisme bloqué sur une goupille centrale (3) en acier, apte à être vissée à une bride de support du cadre de la bicyclette ; sur la goupille centrale (3) où tourne tout le mécanisme à l'aide de deux paliers à billes (4), un tubulaire de logement des paliers (4), de préférence en acier ou en alliage léger pour réduire le poids global, est partagé en deux parties vissées entre elles et bloquées par une vis de blocage, qui peut aussi être réalisée en un seul corps ; sur une première partie (7) du tubulaire est vissée la troisième roue dentée (8), sur une seconde partie (5) du tubulaire se trouvent les rails de glissement (5b) de la quatrième roue dentée (6), le mécanisme est fixé au cadre par au moins un ressort d'arrêt (11) externe à la bride de support, la troisième roue dentée (8) est fixée à la première partie (7) du tubulaire du mécanisme par un vissage jusqu'en butée, la quatrième roue dentée (6) et les rails de glissement (5a, 5b) sont de préférence réalisés en acier ou en alliage léger ; la butée de fin de course située à l'intérieur d'un rail (5a) fait partie des rails, tandis qu'à l'extérieur, elle est réalisée par un collier amovible (2), fixé par des vis (1) qui sont vissées aux rails.

4. Bicyclette comprenant :
- un cadre de support ;
- un groupe pédalier relié au cadre de support, composé de deux pédales et une première roue dentée interposée entre elles autour de laquelle est placée opérationnellement une première chaîne ; et
- un groupe de pignons relié au cadre de support, composé au moins de deux secondes roues dentée autour desquelles est placée opérationnellement une seconde chaîne, le déplacement de la seconde chaîne sur l'une des deux secondes roues dentées se produit en changeant de rapport ;
**caractérisée** aussi en ce qu'elle comprend au moins un système de glissement latéral placé entre le groupe pédalier et le groupe de pignons, qui est composé d'un mécanisme doté de :
- au moins une troisième roue dentée (8) autour de laquelle est placée opérationnellement la première chaîne ;
- au moins une quatrième roue dentée (6), autour de laquelle est placée opérationnellement la seconde chaîne, dont la rotation est solidaire de la troisième roue dentée (8) ;
- au moins un rail (5a, 5b) auquel est relié opérationnellement la quatrième roue dentée (6) ; ce rail (5a, 5b) possède un axe longitudinal qui est parallèle à l'axe de rotation de la première, seconde, troisième et quatrième roue dentée (8, 6) ; où la quatrième roue dentée (6) est apte à glisser le long du rail (5a, 5b) grâce au déplacement de la seconde chaîne sur l'une des secondes roues dentées après un changement de rapport, de sorte à maintenir le plan de rotation de la seconde chaîne substantiellement parallèle au plan du cadre de support ;
- au moins une cinquième roue dentée, de diamètre inférieur à la troisième roue dentée (8), qui est placée à côté de la troisième roue dentée (8) ; la cinquième roue dentée sert de multiplicateur de vitesse tandis que la troisième roue dentée (8) sert de réducteur de vitesse ;
- au moins une sixième roue dentée tendeur de chaîne placée au contact de la première chaîne, positionnée entre la première roue dentée et la troisième/cinquième roue dentée (8) et ayant une rotation de tension vers le haut ; et
- un élément dérailleur positionné entre la troisième/cinquième roue dentée (8) et la sixième roue dentée tendeur de chaîne, de sorte à être mis en contact avec la course inférieure de la première chaîne quand celle-ci est en état déchargé, à savoir sans tension.

5. Bicyclette, selon la revendication 4, **caractérisée en ce que** la quatrième roue dentée (6) est apte à glisser latéralement de manière automatique, grâce à la force latérale transmise par le déplacement de la cassette, associé au mouvement de rotation du système, en plus de la tension de la seconde chaîne produite par le ressort du tendeur de chaîne de la cassette, qui produira donc l'action d'alignement automatique de la seconde chaîne de manière uniforme et régulière.

6. Bicyclette, selon la revendication 4 ou 5, **caractérisée en ce que** la quatrième roue dentée (6) est apte à glisser latéralement sur deux rails à tête ronde (5a, 5b), sur lesquels se trouvent les sièges ronds (6a) de la quatrième roue dentée (6), dont les arrondis garantissent la surface minimale de contact entre les parties, en réduisant le frottement et l'effet de la force contraire au glissement, due à la compression de la seconde chaîne sous tension qui pousse contre la quatrième roue dentée (6) et au moins l'un des rails (5a, 5b).

7. Bicyclette selon l'une des revendications 4, 5 ou 6, **caractérisée en ce que** le système de glissement latéral est composé aussi d'un mécanisme bloqué sur une goupille centrale (3) en acier, apte à être vissée à une bride de support du cadre de la bicyclette ; sur la goupille centrale (3) où tourne tout le mécanisme à l'aide de deux paliers à billes (4), un tubulaire de logement des paliers (4), de préférence en acier ou en alliage léger pour réduire le poids global, est partagé en deux parties vissées entre elles et bloquées par une vis de blocage, qui peut aussi être réalisée dans un seul corps ; sur la première partie (7) du tubulaire sont vissées la troisième et la cinquième roue dentée (8), sur la seconde partie (5) du tubulaire se trouvent les rails de glissement (5b) de la quatrième roue dentée (6) ; le mécanisme est fixé au cadre par au moins un ressort d'arrêt (11) externe à la bride du cadre, la troisième et la cinquième roue dentée (8) sont fixées à la première partie (7) du tubulaire du mécanisme par vissage jusqu'en butée ; la quatrième roue dentée (6) et les rails de glissement (5a, 5b) sont réalisés de préférence en acier ou en alliage léger ; la butée de fin de course à l'intérieur d'un rail (5a) fait partie des rails tandis qu'à l'extérieur elle est réalisée par un collier amovible (2) fixé par des vis (1) qui sont vissées au moins à un rail (5a, 5b).

8. Bicyclette selon l'une des revendications précédentes, **caractérisée en ce que** le groupe de pignons possède une cassette dotée au moins de deux rapports, et de préférence de douze rapports ou davantage.
